# EUROPÄISCHE PATENTSCHRIFT

(11) **EP 2 313 687 B1**
(45) Veröffentlichungstag und Bekanntmachung des Hinweises auf die Patenterteilung: **25.12.2019**
(21) Anmeldenummer: 09776997.0
(22) Anmeldetag: 07.07.2009
(51) Int. Cl.: F23D 14/26, F23D 1/00, F23D 23/00, C01B 3/36, C10J 3/48, F23N 5/08, F23N 5/12

(54) **VERFAHREN ZUM ZÜNDEN UND ZUM BETRIEB VON BRENNERN BEI DER VERGASUNG KOHLENSTOFFHALTIGER BRENNSTOFFE**
METHOD FOR IGNITING AND OPERATING BURNERS WHEN GASIFYING CARBON-CONTAINING FUELS
PROCÉDÉ POUR ALLUMER ET FAIRE FONCTIONNER DES BRÛLEURS LORS DE LA GAZÉIFICATION DE COMBUSTIBLES CONTENANT DU CARBONE

(30) Priorität: 15.07.2008 DE 102008033096
(43) Veröffentlichungstag der Anmeldung: 27.04.2011
(73) Patentinhaber: thyssenkrupp Industrial Solutions AG, 45143 Essen (DE)
(72) Erfinder: KUSKE, Eberhard, 59494 Soest (DE); KOWOLL, Johannes, 44799 Bochum (DE); WERNEKE, Hubert, 44263 Dortmund (DE); DZIOBEK, Frank, 45370 Mühlheim (DE)
(74) Vertreter: Kutzenberger Wolff & Partner
(86) Internationale Anmeldenummer: PCT/EP2009/004894
(87) Internationale Veröffentlichungsnummer: WO 2010/006723

(56) Entgegenhaltungen:
- WO-A2-2006/138174
- DE-A1- 4 306 980
- DE-A1-102005 048 488
- DE-A1-102006 059 149
- FR-A- 994 132
- NL-A- 269 082
- US-A- 4 353 712
- US-A- 4 595 353
- US-A1- 2008 020 333

## Beschreibung

Die Erfindung richtet sich auf ein Verfahren zum Zünden und zum Betrieb von Brennern bei der Vergasung kohlenstoffhaltiger Brennstoffe unter Einsatz wenigstens zweier Vergasungsbrenner.

Eine derartige Verfahrensweise, bei der mehrere Staubbrenner von einem Pilotbrenner gezündet werden, zeigen die DE 10 2005 048 488 A1 und DE 10 2006 059 149 A1. Andere Verfahrensweisen zum Zünden setzen z.B. sogenannte Zündlanzen ein, wie dies die DE 32 27 155 A1 zeigt, wobei die Durchführung derartiger beweglicher Zündhilfsmittel durch die Feuerraumwände einen zusätzlichen Aufwand mit sich bringt, was zur Verteuerung derartiger Einrichtungen führt. Andere Beispiele zeigen die EP 0 347 002 B1, EP 0 511 479 A1, US 4 089 628, US 5 273 212, DD 231 962 A oder DD 241 457 A.

Zum Stand der Technik sei auch noch auf die DE 196 41 843 A1, DE 195 29 994 C2, DE 100 24003 A1, DE 100 19 198 A1, DE 734 927 A, EP 0 095 103 B1, WO 2008/055829 A1 DE 43 06 980 A1 oder die AT 286 072 B verwiesen.

Ein Nachteil der bekannten Verfahrensweise besteht u.a. darin, dass die Pilot- bzw. Zündbrenner weiter im Betrieb gehalten werden und dabei einen permanenten Gas- und Sauerstoff- bzw. Luftdurchfluss bedingen, um ein Verstopfen mit Schlacke od. dgl. zu verhindern. Dabei ist insbesondere bei hohem Schlackefluss an der Vergaserwand das Freihalten entsprechender Austrittsöffnungen problematisch. Wie oben schon erwähnt, ist der Einsatz von beweglichen Zündlanzen aus anderen Gründen kostenaufwändig und problematisch. Zugangskanäle zum Vergasen müssen dabei vor Einführung des Zündbrenners kontrolliert und üblicherweise gereinigt werden, Dichtungen müssen ersetzt werden u. dgl. mehr, wobei diese Arbeiten im drucklosen Zustand durchgeführt werden müssen.

Sind diese Arbeiten auszuführen, muss der Vergaser und die nachgeschaltete Gasbehandlung, einschließlich H₂S und COS-Entfernung, zuerst entspannt und inertisiert werden, wobei die mit Inertgas verdünnten Brenngase üblicherweise abgefackelt werden. Nach Zündung des Zündbrenners muss dann der Druck langsam angehoben werden, z.B. 0,5 bar/min, und das Inertgas durch das im Vergaser erzeugte Gas verdrängt werden, wobei wiederum das verdrängte und mit Brenngas vermischte Gas in der Fackel verbrannt werden muss. Dieser Vorgang ist nicht nur zeitaufwändig, sondern weist einen hohen Zündbrennstoffverbrauch auf mit entsprechend hohen Emissionswerten durch die Fackel.

Hier setzt die Erfindung an, deren Aufgabe darin besteht, einen Start der Druckvergasung zu ermöglichen mit kurzen Startzeiten bei hohen Drücken ohne vorhergehende Inertisierung des Gasraumes bei Vermeidung eines kontinuierlichen Brenngasverbrauches im Pilot- bzw. Zündbrenner, wobei bei stationären Zündbrennern diese auch vor Verschmutzung geschützt sind.

US 4 353 712 A offenbart den Oberbegriff des Anspruchs 1.

Mit einer Verfahrensweise der eingangs bezeichneten Art wird diese Aufgabe gemäß der Erfindung dadurch gelöst, dass einer der Vergasungsbrenner als Start-up-Brenner ausgebildet wird, für dessen Zündung wenigstens ein Pilotbrenner dient, der über eine elektrische Zündvorrichtung gezündet wird, wobei durch den Pilotbrenner in dem Start-up-Brenner ein brennbares Gasgemisch aus einem Brenngas und sauerstoffhaltigem Gas gezündet wird, wobei nach Zündung des Start-up-Brenners von diesem wenigstens ein weiterer Vergasungsbrenner gezündet wird und der Start-up-Brenner durch Mediumswechsel als einer der Vergasungsbrenner des kohlenstoffhaltigen Brennstoffes weiterbetrieben wird.

Durch die in Art einer Kaskade erfolgte Zündung werden eine Reihe von Vorteilen erreicht, die insbesondere ermöglichen, dass eine Zündung bei hohem Druck möglich ist und eine bewegbare oder verschiebbare Zündvorrichtung entfällt. Damit entfällt auch die Notwendigkeit, den Zugangskanal des verschiebbaren Zündbrenners vor jedem Start zu reinigen und die Abdichtung des entsprechenden Kanales zu erneuern. Diese erfindungsgemäße Verfahrensweise macht es insbesondere möglich, dass eine Mehrzahl von Vergasungsbrennern unter Einsatz eines Pilotbrenners beim Anfahren als Start-up-Brenner betrieben werden kann.

Eine schnelle Druckerhöhung vor der Zündung des Vergasungsbrenners ist ohne Inertisierung des Gasraumes möglich, Emissionen durch das Abfackeln während des Ab- bzw. Anfahrens entfallen, um nur einige Vorteile zu nennen.

Ausgestaltungen der Erfindung ergeben sich aus den Unteransprüchen.

Dabei können einzelne Pilotbrenner gezündet werden, wodurch das durch die entsprechenden Vergasungsbrenner erzeugte brennbare Gemisch und die daraus gebildete Flamme anschließend dazu benutzt werden können, das Gas-/Sauerstoff-Gemisch aus weiteren Vergasungsbrennern zu zünden. Dabei werden Leistung und Stabilität der Zündflammen erhöht. Diese können dann weitere Kohlenbrenner zünden, wobei das Regelungs- und Überwachungskonzept der Startroutine stark vereinfacht wird.

Eine weitere Ausgestaltung der erfindungsgemäßen Verfahrensweise besteht darin, dass der Pilotbrenner nach Zündung des Start-up-Brenners zur Verhinderung des Zusetzens zusätzlich mit einem Gasgemisch, das CO₂ und/oder Dampf und/ oder Sauerstoff, ggf. auch Inertgas, enthält und an den Vergasungsreaktionen teilnimmt, beaufschlagt wird, so dass der Pilotbrenner voll in das Vergasungssystem integriert ist.

Vorteilhaft ist auch, wenn der Pilotbrenner zunächst bei weniger als 50 % der Leistung des als Gasbrenner betriebenen Vergasungsbrenners und mit einer Sauerstoffüberschusszahl von 0,8 bis 1,2 gezündet wird, wobei auch vorgesehen sein kann, dass zur Beschleunigung der Zündung des sauerstoffhaltigen Gemisches im Vergaser der Pilotbrenner mit Brennstoffüberschuss-Sauerstoffüberschusszahl < 0,8 beaufschlagt wird.

Eine Hilfe beim Zünden des Vergasers besteht in der Überwachung der Zündflamme des Pilotbrenners, wobei die Flamme so überwacht wird, dass bei Erkennen der Flamme das Zündelement des Pilotbrenners abgeschaltet wird.

Wird die Flamme mit einem Ionisationsflammenwächter überwacht, so kann das Zündelement des Pilotbrenners als entsprechende Elektrode eingesetzt werden, wie dies die Erfindung ebenfalls vorsieht.

Erfindungsgemäß kann ein optischer Flammenwächter eingesetzt werden oder die Veränderung des elektrischen Widerstandes des Zündelementes zur Erkennung der Flamme herangezogen werden.

Die oben formulierte Aufgabe wird durch ein Verfahren gemäß Anspruch 1 gelöst, bei welchem unter anderem ein Pilotbrenner eingesetzt wird.

Der als solcher nicht beanspruchte Pilotbrenner ist mit einem zentrischen Düsenkopf ausgerüstet, der von einem Brennerrohr umgeben ist, das den Düsenkopf in Strömungsrichtung des Brenngases überragt, wobei innerhalb des Brennerrohrraumes wenigstens eine elektrische Zündvorrichtung und in Strömungsrichtung dahinter eine Querschnittsverringerung des Brennerrohres vorgesehen ist.

Mit dieser Gestaltung ist es möglich, z.B. ein elektrisch beheiztes keramisches Glühelement einzusetzen. Die Querschnittsverringerung im Brennerrohr sorgt für eine Drallerzeugung im Düsenbereich, so dass heißes Gas in die Umgebung der Düsenmündung zurückgeführt wird und das kältere Gemisch aus frisch eingespeisten Gasen zündet und zusätzlich ein höheres Turbulenzniveau eingestellt werden kann, um eine einfache Zündung zu bewirken. Dadurch kann die Flamme durch die entsprechenden Einschnürungen stabilisiert werden.

Wie weiter oben schon erwähnt, ist es wichtig, die Flamme des Pilotbrenners zu überwachen, wobei erfindungsgemäß dem Brennerrohr wenigstens ein Flammenüberwachungselement zugeordnet ist, z.B. eine optische Flammenüberwachung mit Glasfaserleitung zu einem entsprechenden elektronischen Bauteil.

Wie weiter unten näher beschrieben, weist der erfindungsgemäße Brenner ringförmige Kanäle auf, wobei durch den ersten ringförmigen Kanal des Start-up-Brenners sauerstoffhaltiges Gas sowohl während des Zündvorganges als auch im Normalbetrieb eingespeist wird, derart, dass die Mündung des Pilotbrenners durch ein sauberes Gas umgeben ist. Wird der Pilotbrenner nach Zündung zur Verhinderung des Zusetzens mit einem Gasgemisch beaufschlagt, hat dies den Vorteil, dass der Brennstoffüberschuss mit dem Sauerstoff aus dem ersten Ringkanal reagieren kann.

Weitere Merkmale, Einzelheiten und Vorteile der Erfindung ergeben sich aufgrund der nachfolgenden Beschreibung sowie anhand der Zeichnung. Diese zeigt in
- Fig. 1: einen Schnitt durch einen Pilotbrenner, der als solcher nicht beansprucht wird, in vereinfachter Darstellung,
- Fig. 2: eine Aufsicht auf den Pilotbrenner gemäß Pfeil II in Fig. 1 sowie in
- Fig. 3: einen Vergasungsbrenner mit zentrisch integriertem Pilotbrenner.

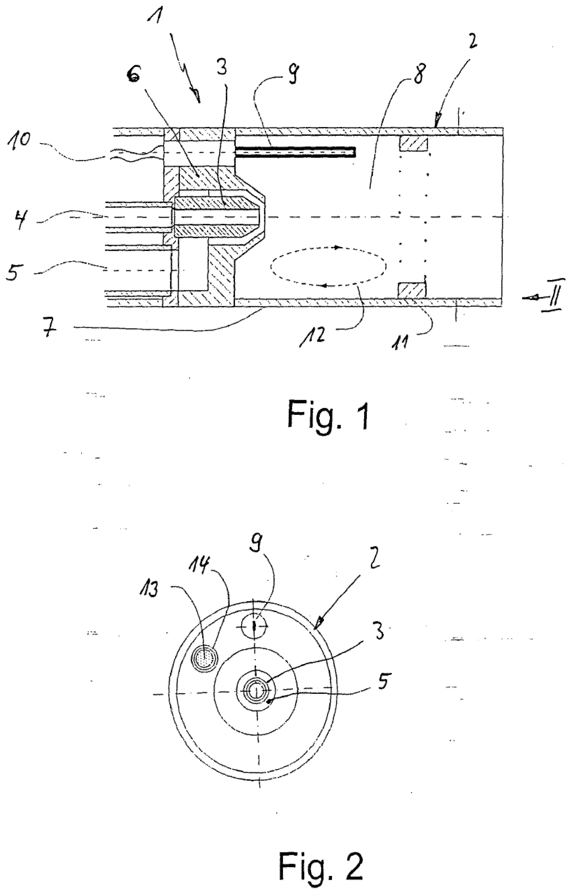

Die allgemein mit 1 bezeichnete Vorrichtung zum Zünden und zum Betrieb von Brennern bei der Vergasung kohlenstoffhaltiger Brennstoffe wird im Wesentlichen von einem Pilotbrenner, in Fig. 1 schematisch und vereinfacht dargestellt und mit 2 bezeichnet, gebildet, der eine Brenngasdüse 3 aufweist, der bei 4 das entsprechende Brenngas zugeführt wird, wobei die Brenngasdüse 3 mit einer Luftzuführung 5 ausgerüstet ist, die konzentrisch die Brenngasdüse 3 umgibt. In Strömungsrichtung einer in den Figuren nicht eingezeichneten Zündflamme ist der mit 6 bezeichnete Düsenkopf von einem Brennerrohr 7 umgeben.

Wie aus Fig. 1 erkennbar, ragt in den vom Brennerrohr 7 gebildeten Rohrraum 8 ein elektrisches Zündelement, z.B. ein Glühelement 9, das zur Zündung des Brenngasluftgemisches über eine elektrische Leitung 10 mit einer entsprechenden Stromquelle verbunden ist. Zur Erzeugung stabiler Flammen und eines optimalen Brennverhaltens ragt in den vom Brennerrohr 7 gebildeten Raum in Ausrichtung der gebildeten Flamme eine Einschnürung, allgemein mit 11 bezeichnet, um so eine Verwirbelung bzw. Zirkulation des Gases zu bewirken, was gestrichelt mit einem Oval-Kreis 12 in Fig. 1 angedeutet ist.

Der Pilotbrenner 2 befindet sich bevorzugt im Zentralkanal des Vergasungsbrenners und wird so vor Schmutz durch das durch den inneren Ringkanal ausströmende Gas geschützt. Zusätzlich kann der zentrale Pilotbrennerkanal durch ein Gas gespült werden.

Zusätzlich ist, wie sich dies aus Fig. 2 ergibt, am Brennerkopf 6 noch ein optisches Flammenüberwachungselement 13 vorgesehen, das von einem Schutzrohr 14 umgeben ist. Die sprunghafte Einschnürung 11 ist dabei in Fig. 2 nicht gesondert wiedergegeben, um die Elemente 9 und 13 darstellen zu können.

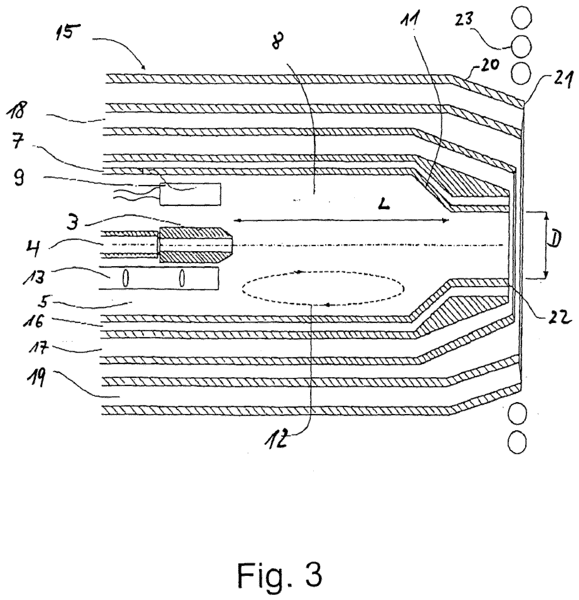

Aus Fig. 3 ist ersichtlich, dass der Pilotbrenner 2 einen integralen Bestandteil eines allgemein mit 15 bezeichneten Vergasungsbrenners darstellen kann, wobei die einzelnen Ring- und Zuführräume des Vergaserbrenners hier vereinfacht wiedergegeben sind. Dieser Vergasungsbrenner 15 kann, wie oben beschrieben, als Start-up-Brenner betrieben werden.

In Fig. 3 ist mit 16 der Ringraum bzw. Ringkanal für Primärsauerstoff bezeichnet, mit 17 der Ringkanal für den Brennstoff, z.B. Gas oder eine Staubsuspension, mit 18 der Ringkanal für den Sekundärsauerstoff und mit 19 der Ringkanal für inertes oder sauerstoffarmes Gas, z.B. N₂, CO₂, Dampf oder Dampf+O₂. Schließlich ist in Fig. 3 noch mit 20 das Außenrohr des Vergasungsbrenners bezeichnet, mit 21 die Mündung des Vergasungsbrenners und mit 22 die Mündung des Pilotbrenners.

Beispiel für einen vorteilhaften Medienwechsel im Pilotbrenner und den benachbarten Kanälen des Vergasungsbrenners.

| Kanal | zündvorgang | Normalbetrieb |
|---|---|---|
| 4 | Brenngas | Kein Gas oder ein Vergasungsmittel oder ein Intergas |
| 5 | Sauerstoffhaltiges Gas | - Kein Gas, wenn z.B. der Brenner abwärts gerichtet ist |
| | | - vorteilhaft ein Vergasungsmittel, das entweder O₂ und/oder CO₂ bzw. Wasserdampf enthält |
| | | - oder ein Brenngas, das im Vergaser zerlegt werden sollte |
| 16 | Sauerstoffhaltiges Gas | Sauerstoffhaltiges Gas |
| 17 | Brenngas | pneumatisch geförderter Brennstoff |
| 18 | Sauerstoffhaltiges Gas | Sauerstoffhaltiges Gas |

Es besteht auch die Möglichkeit, die Ringkanäle 16 bis 19 mit Inertgas zur Spülung des jeweiligen Kanales zu durchströmen. So kann beispielsweise durch den Kanal 6 Inertgas strömen und so eine Verschmutzung im Bereich der Mündung des Pilotbrenners 22 verhindern.

Die Größe des Rückströmgebietes 12 Oval-Kreis kann durch L/D-Verhältnis beeinflusst werden.

Ein Überwachungselement 13 zur Flammenüberwachung kann ein Linsensystem sein, welches mit Spülluft gegen Verschmutzung oder auch zur Kühlung beaufschlagt werden. Dieses kann durch Schutzrohr (Fig. 2, 14 Schutzrohr) umgeben sein. Ein Überwachungselement kann auch durch ein geeignetes Lichtleitersystem realisiert werden.

Das Überwachungselement kann parallel zum Düsenkanal der Brenngaszuführung integriert sein.

Eine weitere Ausführungsmöglichkeit besteht in der Art und Weise, dass dieses Überwachungselement zentral innerhalb des Brenngaszuführungskanales integriert ist, so dass eine Flammenüberwachung durch den Düsenkanal hindurch erfolgt.

Das Überwachungselement kann zum einen die Flamme des Pilotbrenners erkennen und im Falle einer Abschaltung des Pilotbrenners durch eine Verwendung des Signales auch zur Erkennung einer Flamme des als Gasbrenner betriebenen Kohlebrenners genutzt werden.

Die Wirkungsweise der Vorrichtung ist dabei die folgende:
Dem Pilotbrenner 2 bzw. der Zentraldüse 3 wird Brenngas zugeführt und die zur Verbrennung notwendige Luft. Dieses Gasgemisch strömt in den mit 8 bezeichneten Innenraum des Brennerrohres 7, in den das mit 9 bezeichnete elektrische Zündelement, z.B. ein Glühelement, hineinragt, wobei die Position eines solchen Glühelementes so getroffen ist, dass eine optimale Zündung des Brennstoff-/Luftgemisches gewährleistet ist. Dies kann z.B. eine schwach durchströmte stelle sein, an der eine Rückströmung des Brenngas-/Sauerstoffgemisches vor der Zündung oder des heißen Abgases nach der Zündung erfolgt.

Nicht dargestellt ist die Möglichkeit, dass mehrere Glühelemente 9 vorgesehen sein können, die, wie oben schon erwähnt, auch zur Ionisationsstrommessung herangezogen werden können.

Das Brennerrohr 7 kann mit einer sprunghaften Einschnürung 11 die Flamme innerhalb des Rohres stabilisieren, wobei durch die Einschnürung ein Teil der heißen Abgase umgelenkt und die Zirkulation 12 verstärkt wird. Dadurch wird beispielsweise das frische kalte Gemisch der zugeführten Gase mit den zirkulierenden heißen Abgasen über die Zündtemperatur zuverlässig erwärmt. Die Flamme dringt aus dem Brennerrohr 7 in den Vergasungsraum und zündet dann dort ein brennbares Gasgemisch aus Brenngas und Oxidationsmittel, die aus den Ringkanälen 16 bis 19 des Vergasungsbrenners während der Zündphase ausströmen. Nachdem die Vergasungsbrenner gezündet sind, können sowohl über die Brenngaszufuhrleitung des Pilotbrenners 4 als auch über die Luftzufuhrleitung 5 Vergasungsmittel, wie CO₂, Dampf oder Gemische mit Sauerstoff, dem Verbrennungsraum zugeführt werden, wodurch sichergestellt wird, dass sich keine Staubablagerungen oder Anbackungen im Pilotbrenner ausbilden.

Weitere Ausgestaltungen sind möglich, ohne den Grundgedanken zu verlassen. So können alternative Eindüsungen der entsprechenden Medien im Pilotbrenner gewechselt und den jeweiligen Einsatzfällen angepasst werden, der Pilotbrenner kann mit Brenngasüberschuss gefahren werden, die Verbrennungsmittel im Pilotbrenner können von Luft gebildet werden oder Sauerstoff mit Stickstoff oder CO₂ oder mit Dampf, um z.B. Russbildung bei unterstöchiometrischer Verbrennung zu vermeiden, es kann sich aber auch um mit Sauerstoff angereicherte Luft handeln, die Sauerstoffzufuhr kann mit und ohne Drall zugeführt werden u. dgl.

## Patentansprüche

1. Verfahren zum Zünden und zum Betrieb von Brennern bei der Vergasung eines kohlenstoffhaltigen Brennstoffes unter Einsatz wenigstens zweier Vergasungsbrenner, wobei einer der Vergasungsbrenner als Start-up-Brenner ausgebildet wird **dadurch gekennzeichnet, dass**
- für dessen Zündung wenigstens ein Pilotbrenner dient,
- der über eine elektrische Zündvorrichtung gezündet wird,
- wobei durch den Pilotbrenner in dem Start-up-Brenner ein brennbares Gasgemisch aus einem Brenngas und sauerstoffhaltigem Gas gezündet wird,
- wobei nach Zündung des Start-up-Brenners von diesem wenigstens ein weiterer Vergasungsbrenner gezündet wird und
- der Start-up-Brenner durch Mediumswechsel als einer der Vergasungsbrenner des kohlenstoffhaltigen Brennstoffes weiterbetrieben wird.

2. Verfahren nach Anspruch 1, **dadurch gekennzeichnet, dass** der Pilotbrenner nach Zündung des Start-up-Brenners zur Verhinderung des Zusetzens mit einem Gasgemisch, das CO₂ und/oder Dampf und/oder Sauerstoff enthält und an den Vergasungsreaktionen teilnimmt, beaufschlagt wird.

3. Verfahren nach Anspruch 1 oder 2, **dadurch gekennzeichnet, dass** der Pilotbrenner zunächst bei weniger als 50 % der Leistung des als Gasbrenner betriebenen Vergasungsbrenners und mit einer Sauerstoffüberschusszahl von 0,8 bis 1,2 gezündet wird.

4. Verfahren nach einem der vorangehenden Ansprüche, **dadurch gekennzeichnet, dass** zur Beschleunigung der Zündung des sauerstoffhaltigen Gemisches im Vergaser der Pilotbrenner mit Brennstoffüberschuss-Sauerstoffüberschusszahl < 0,8 beaufschlagt wird.

5. Verfahren nach einem der vorangehenden Ansprüche, **dadurch gekennzeichnet, dass** die Flamme des Pilotbrenners überwacht wird und bei Erkennung der Flamme das Zündelement des Pilotbrenners abgeschaltet wird.

6. Verfahren nach einem der vorangehenden Ansprüche, **dadurch gekennzeichnet, dass** zur Überwachung der Flamme des Pilotbrenners ein lonisationsflammenwächter eingesetzt wird, wobei das Zündelement als Elektrode eingesetzt wird.

7. Verfahren nach Anspruch 5, **dadurch gekennzeichnet, dass** ein optischer Flammenwächter eingesetzt wird, wobei das optische Signal über eine Linse und einem Wellenleiter zu einem Detektor geleitet wird.

8. Verfahren nach Anspruch 5, **dadurch gekennzeichnet, dass** zur Überwachung der Flamme des Pilotbrenners die Veränderung des elektrischen Widerstandes des Zündelementes eingesetzt wird.

## Claims

1. Method for igniting and operating burners in the gasification of a carbon-containing fuel using at least two gasification burners, where one of the gasification burners is configured as start-up burner, **characterized in that**
- at least one pilot burner serves for the ignition thereof,
- the pilot burner is ignited by means of an electric ignition device,
- where a combustible gas mixture of a fuel gas and an oxygen-containing gas is ignited in the start-up burner by means of the pilot burner,
- where at least one further gasification burner is ignited by the start-up burner after ignition thereof and
- the start-up burner is operated further as one of the gasification burners for the carbon-containing fuel after a change in medium.

2. Method according to Claim 1, **characterized in that** after ignition of the start-up burner, the pilot burner is, in order to prevent clogging, supplied with a gas mixture which contains CO₂ and/or steam and/or oxygen and participates in the gasification reactions.

3. Method according to Claim 1 or 2, **characterized in that** the pilot burner is initially ignited at less than 50% of the power of the gasification burner operated as gas burner and at an oxygen excess coefficient of from 0.8 to 1.2.

4. Method according to any of the preceding claims, **characterized in that** the pilot burner is supplied with a fuel excess/oxygen excess coefficient of < 0.8 in order to accelerate ignition of the oxygen-containing mixture in the gasifier of the pilot burner.

5. Method according to any of the preceding claims, **characterized in that** the flame of the pilot burner is monitored and the ignition element of the pilot burner is switched off when the flame is recognized.

6. Method according to any of the preceding claims, **characterized in that** an ionization flame monitor is used for monitoring the flame of the pilot burner, with the ignition element being used as electrode.

7. Method according to Claim 5, **characterized in that** an optical flame monitor is used, with the optical signal being transmitted by a lens and a waveguide to a detector.

8. Method according to Claim 5, **characterized in that** the change in the electrical resistance of the ignition element is used for monitoring the flame of the pilot burner.

## Revendications

1. Procédé d'allumage et de fonctionnement de brûleurs lors de la gazéification d'un combustible carboné à l'aide d'au moins deux brûleurs à gazéification, l'un des brûleurs à gazéification étant conçu comme un brûleur de démarrage, **caractérisé en ce que**
- au moins un brûleur pilote est utilisé pour effectuer l'allumage de ce brûleur d'allumage,
- lequel brûleur pilote est allumé par un dispositif d'allumage électrique,
- un mélange de gaz combustible composé d'un gaz combustible et d'un gaz contenant de l'oxygène étant allumé par le brûleur pilote dans le brûleur de démarrage,
- après avoir allumé le brûleur de démarrage, au moins un autre brûleur à gazéification étant allumé par ce brûleur et
- le brûleur de démarrage continuant à fonctionner comme l'un des brûleurs de gazéification du combustible carboné par changement de milieu.

2. Procédé selon la revendication 1, **caractérisé en ce que**, après allumage du brûleur de démarrage, le brûleur pilote est alimenté avec un mélange gazeux, contenant du CO₂ et/ou de la vapeur et/ou de l'oxygène et participant aux réactions de gazéification, pour éviter l'obstruction.

3. Procédé selon la revendication 1 ou 2, **caractérisé en ce que** le brûleur pilote est d'abord allumé à moins de 50 % de la puissance du brûleur de gazéification, utilisé comme brûleur à gaz, et avec un excès d'oxygène de 0,8 à 1,2.

4. Procédé selon l'une des revendications précédentes, **caractérisé en ce que**, pour accélérer l'allumage du mélange contenant de l'oxygène dans le gazéificateur, le brûleur pilote est alimenté avec un indice d'oxygène excédentaire et de combustible excédentaire < 0,8.

5. Procédé selon l'une des revendications précédentes, **caractérisé en ce que** la flamme du brûleur pilote est surveillée et, lors de la détection de la flamme, l'élément d'allumage du brûleur pilote est éteint.

6. Procédé selon l'une des revendications précédentes, **caractérisé en ce qu'**un contrôleur de flamme d'ionisation est utilisé pour surveiller la flamme du brûleur pilote, l'élément d'allumage étant utilisé comme électrode.

7. Procédé selon la revendication 5, **caractérisé en ce qu'**un détecteur de flamme optique est utilisé, le signal optique étant transmis à un détecteur par le biais d'une lentille et d'un guide d'onde.

8. Procédé selon la revendication 5, **caractérisé en ce que**, la variation de la résistance électrique de l'élément d'allumage est utilisée pour surveiller la flamme du brûleur pilote.
